# EUROPEAN PATENT SPECIFICATION

(11) **EP 1 572 841 B1**
(45) Date of publication and mention of the grant of the patent: **30.04.2008**
(21) Application number: 03773574.3
(22) Date of filing: 18.11.2003
(51) Int. Cl.: C10J 3/00, C02F 11/00

(54) **METHOD OF MANURE SLURRY TREATMENT**
VERFAHREN ZUR GÜLLEBEHANDLUNG
PROCEDE DE TRAITEMENT DE LISIER

(30) Priority: 18.11.2002 DK 200201775
(43) Date of publication of application: 14.09.2005
(73) Proprietor: Samson Bimatech I/S, 8850 Bjerringbro (DK)
(72) Inventor: BRAUER, Peter, Dirk, DK-8860 Ulstrup (DK)
(74) Representative: Nilausen, Kim
(86) International application number: PCT/DK2003/000787
(87) International publication number: WO 2004/046279

(56) References cited:
- EP-A- 0 607 644
- EP-A- 1 182 248
- WO-A-99/42423
- US-A- 4 198 211
- PATENT ABSTRACTS OF JAPAN vol. 005, no. 111 (C-063), 18 July 1981 (1981-07-18) & JP 56 051292 A (HITACHI PLANT ENG & CONSTR CO LTD), 8 May 1981 (1981-05-08)
- LISE MÖLLER AARUP: "Gylleseparator giver renere miljö" INGENJÖREN, vol. 24, June 2002 (2002-06), XP002272974
- PATENT ABSTRACTS OF JAPAN vol. 013, no. 579 (C-668), 20 December 1989 (1989-12-20) & JP 01 242185 A (KEMIKARUMAN:KK), 27 September 1989 (1989-09-27)

## Description

### Field of invention

This invention relates to an improved method of treating manure slurry and to a new apparatus for treating of manure slurry.

### Background

Manure slurry and especially manure slurry from pigs forms an increasing problem for many farmers. Neighbours to farms often complain about the smell from manure and as a result of such complaint, the farmers are often constrained in increasing the production.

Further governmental regulations set limits for how many animals a farmer is allowed to have on a farm with a given agricultural area. Among these regulations are limits on how and when the farmer is allowed to spread the manure on his agricultural area. In certain countries it is not even allowed to spread the manure and therefore the farmer has to get rid of the manure by other means. These limits call for increased storage tanks for the manure slurry and often tight regulations for how to store the manure slurry.

If a farmer intends to increase the number of animals on his farm, he has to increase his agricultural area or be able to treat his manure without hampering his neighbours or the environment.

In the manure there are substantial amounts of substances suitable in fertilizers and that can be used as substitutes for commercially available fertilizers. By isolating these substances from the manure in an essentially smell free form it would be possible for the farmer to save expenses to commercial fertilizers and minimize the stored amount of manure.

### Prior art

EP 1 182 248 A1 discloses a method of processing animal manure comprising drying the manure, subjecting the manure to gasification thereby yielding a combustible gas mixture, purifying the gas mixture and cracking the gas mixture. The gasification is carried out at temperatures well above 600°C in order to avoid tar production. This method is mainly suitable in processing relatively dry manure such as manure from chickens.

Ingeniøren, Friday 14.6.02, number 24 page 14 "Gylleseparator giver renere miljø" discloses a process for treating manure wherein the manure is separated in a fibre fraction and a manure water fraction, said manure water fraction being degassed by heating. The gas is purified for fatty acids and the remaining manure water fraction is concentrated. In this process which is merely a concentration process the energy rich fibre fraction is just left unused and the energy in the fatty acids as well.

Drying manure with a relatively high water content requires too much energy to be economically suitable. Therefore, there is a need for a process which in a cheap and easy way can process both water rich and water poor manure.

### Summary of the invention

The inventors have discovered that by separating the manure slurry in a fibre fraction and a water fraction and further processing these fractions, in a special manner the manure slurry can be converted to ashes and water with an energy surplus.

According to the invention there is provided a method of treating manure slurry comprising the steps of
a) separating the manure slurry in a fraction containing a substantial amount of fibres and a first water fraction essentially consisting of water,
b) drying said fibre fraction,
c) subjecting said dried fibre fraction to gasification to form a combustible mixture of gasses,
d) heating the water fraction to an elevated temperature to thermally degrade organic compounds and optionally to evaporate water so as to form a combustible gas mixture and a second water fraction
e) burning at least a part of the combustible gasses from steps c) and d) to generate heat for the drying, gasification and/or heating in steps b), c) and d), respectively
f) heating the water fraction to an elevated temperature above 95° to thermally degrade organic compounds and optionally to evaporate water so as to form a combustible gas mixture and a second water fraction.

By use of this process an essentially manure free pig production is possible and farmers will be able to expand without the problems previously mentioned. Further the farmer will be able to reduce expenses for heating since the process has an output of hot water.

Further the process can provide the main substances in fertilizers in an essentially pure form thereby giving the farmer the possibility of reducing the amount of commercial fertilizers.

### Description of preferred embodiment

The invention is based on the discovery that by processing manure slurry in the above mentioned manner sufficient energy is generated to allow the above mentioned processes to be performed without the supply of external energy. Furthermore the method of the invention also makes it possible to recover oil useful in diesel engines, to recover metals and to recover phosphorous compounds, ammonia compounds and potasium compounds.

### The separation step

In a preferred embodiment of the invention the manure slurry is separated in a fibre fraction and a first water fraction by mechanical means e.g. a centrifuge or a press. In an even more preferred embodiment vacuum is used to aid the separation. Optionally a flocculation agent such as alumina based electrolytes, sulphate compounds, polyelectrolytes and humin based compounds; bases such as Ca(OH)₂ or acids such as H₂SO₄ can be added to the manure in order to increase the fibre fraction as much as possible. Furthermore micro bubbles can be used to facilitate the separation.

### The drying step

The fibre fraction from the separation step is dried preferably by means of heat. Preferably the fibre fraction is dried to a dry solid matter content of at least 75%, preferably to a dry solid matter content of at least 80%, more preferred to a dry solid matter content of at least 85%, and most preferred to a dry solid matter content of at least 95%.

In a preferred embodiment the drying is performed by means of a combination of heat and vacuum.

In another embodiment an Archimedes screw is used during the drying process, thereby achieving a continuous transportation of the fibre fraction through the drier.

Preferably the evaporated product from the drying process is combined with the first water fraction supplied to the heating step, preferably either in an intermediate storage tank, during a thermal degradation step or during a concentration of the water fraction. Optionally possible combustible gasses being in said evaporated product are isolated and condensed or used as fuel.

In another preferred embodiment the evaporated product is treated separately in at least one scrubber yielding a combustible gas and a disposable condensate.

### The gasification step

The gasification can be performed at temperatures in the range from 250°C to 900°C. In a preferred embodiment the gasification is performed at temperatures between 400°C and 650°C and most preferred between 500°C and 600°C. The gas produced has an energy content sufficient for running the process. In one embodiment at least 50% of the fibre mass is converted to gas, preferably at least 60 % and most preferably at least 65%.

When using a temperature above 520°C to 560°C both phosphor and ammonia will mainly be in the gas phase.

Each kg of solid matter produces energy equal to 4-4.5 kWh which is bound in the produced gas and the residue from the gasification.

In a preferred embodiment the gasification is performed in a pipe with the fibres inside and heat for the gasification applied on the outside. Preferably the heat is supplied in a manner to provide a heating rate at 2°C to 7°C per second. Preferably the pipe is made of a chamotte material.

Optionally the gasification is carried out in such a manner that combustible pyrolysis coal (residue) is an additional product of the gasification step.

The ash from an optional combustion of the residue from the gasification is in the form of a very fine powder which is rich in metals such as Zn, Cu and Ni. Said ash is therefore suitable for the refining industry such as the galvano industry which is working with a cathode-anode setup depositing the pure metals on the cathode.

In a preferred embodiment the gas produced during the gasification is purified, preferably by use of at least one scrubber. In a more preferred embodiment the gas is purified in two sequential scrubbing processes e.g. by first scrubbing with base such as Ca(OH)₂ or KOH in a first scrubber and afterwards scrubbing with H₂SO₄ in a second scrubber. The output of the scrubbing processes is one or more of the following compounds Ca(H₂PO₄)₂ CaCO₃, K₂SO₄, (NH₄)₂SO₄, Ca(HSO₄)₂, KHSO₄ and K₂CO₃. These compounds can be used as commercial fertilizers.

In another embodiment the produced gas from the gasification step is combined with the gas produced in optional boiling of the first water fraction.

### The Boiling step (thermal degradation)

In a preferred embodiment of the method the manure water fraction is heated under pressure in order to thermally decompose organic matter. The manure water fraction is heated to above 95°C, preferably the manure water fraction is heated to above 120°C, more preferably the water fraction is heated to above 140°C, most preferably the manure water fraction is heated to between 140°C and 160°C. During this thermal decomposition a small amount of combustible gas is produced. In a preferred embodiment this step is performed at an elevated pressure.

In a preferred embodiment acid or base is added to the water fraction in order to aid the thermal decomposition of organic matter and to kill possible bacteria. Preferred acids are strong acids such as H₂SO₄ and preferred bases are strong bases such as KOH, Ca(OH)₂. In a particularly suitable embodiment the pH is kept above 11 during the boiling.

Addition of acid in this step keeps ammonia in solution and thereby providing the possibility for a later separation, if desired.

The water fraction is preferably concentrated and preferably under reduced pressure. This concentration can be performed in commercially available evaporators. In a preferred embodiment the evaporator reuses the heat in the generated steam to further evaporation, as the skilled person is fully aware of.

In a preferred embodiment the hot water from the concentration is used to heat the production facility e.g. a piggery or a house.

In a preferred embodiment the exit water has a temperature between 85°C and 95°C.

In a preferred embodiment the gases from the concentration are scrubbed with acid and base as previously described.

In a preferred embodiment the hot water from the concentration is used to preheat the first water fraction.

### The combustible gases

Depending on the desire of the farmer, the combustible gases can be burned and thereby provide the heat for the process plus an excess, or some of the gases can be condensed into pyrolysis oil.

In a preferred embodiment of the invention the light gases are burned as well as some of the heavier in order to run the process. The excess of heavier gasses is condensed to pyrolysis oil which can be stored and used during start up or combusted in diesel engines.

In a preferred embodiment the entire process is performed in a closed system except for the combusting of the produced gasses. Thereby it is possible to obtain an essentially smell free manure decomposition.

In an alternative embodiment the manure slurry is pre-treated with heat prior to separation. Optionally thermal degradation is carried out during this pretreatment.

In a preferred embodiment the drying step, the gasification step and/or the heating step are carried out at reduced pressure.

The invention will now be describe in further detail with reference to the drawings in which
Figure 1 shows a flow chart of the main steps in the process.
Figure 2 shoes a flow chart of the recycling of metals from ashes
Figure 3 shows a flow chart of the scrubbing sequence
Figure 4 shows a flow chart of a preferred heat treating of a water fraction Figure 5 is an illustration of the flow in an apparatus for carrying out the invention.

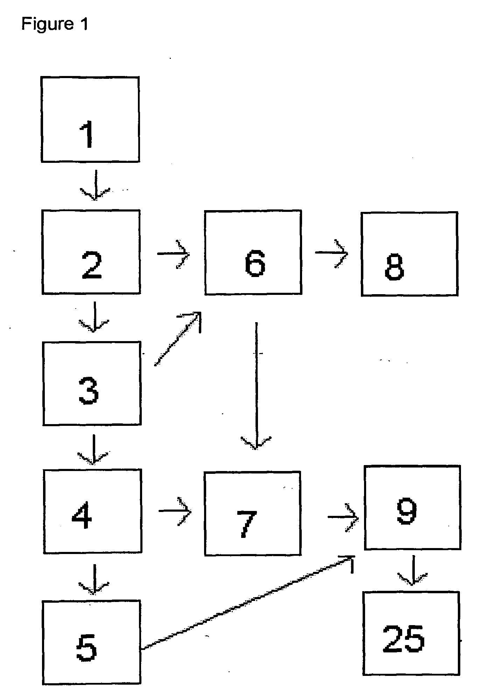

Figure 1 shows one embodiment of the invention, where manure slurry (1) first is separated into a fraction containing fibres and a first water fraction in a filtering unit (2). The fibre fraction is dried in a drier (3) using heat from burned combustible gasses. The dried fibre fraction is subjected to gasification in a gasification unit (4), by use of heat from the burned combustible gasses. The gasification results in residue (pyrolysis coal) (5) and a combustible gas (7). The water fraction from the separation unit (2) is subjected to heat (6) resulting in a combustible gas fraction (7) and a second water fraction (8). The combined combustible gasses and optionally the residue from the gasification (5) are burnt in an oven (9) thereby providing heat for the drying, the gasification and the heat treatment of the first water fraction. In a preferred embodiment the hot second water fraction (8) is used to pre-heat the first water fraction. The combustion of said residue results in a small amount of ashes (25).

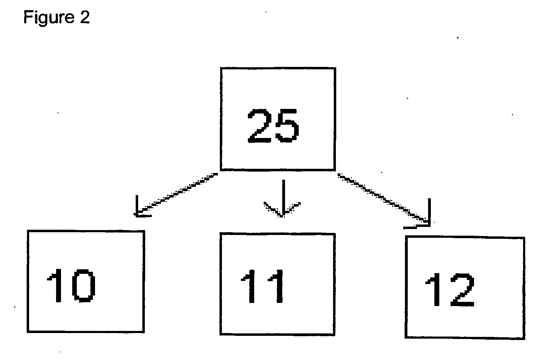

Figure 2 shows the possible refining of the ashes (25) from the gasification. The ashes can by galvano refining be separated in copper (10), zink (11) and nickel (12).

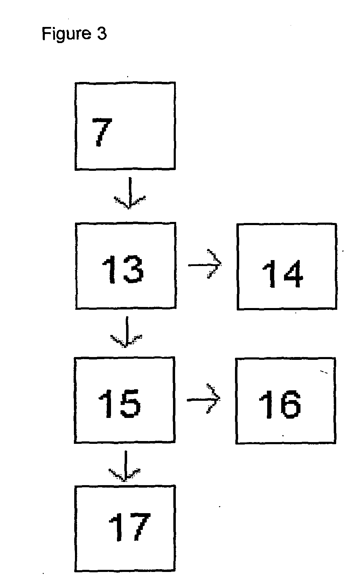

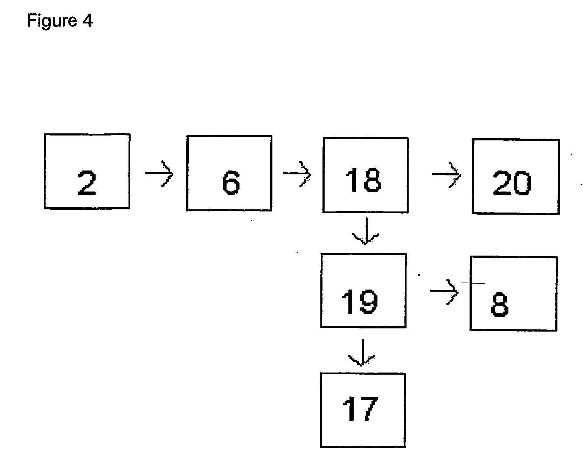

The combustible gasses (7) can be purified by scrubbing as shown in figure 3. The gasses are first scrubbed in a first scrubber (13) with Ca(OH)₂ resulting in a mixture of Ca(H₂SO₄)₂ and CaCO₃ (14). Secondly the gasses are scrubbed in a second scrubber (15) with H₂SO₄ resulting in (NH₄)₂SO₄ and K₂SO₄ (16) and a purified gas mixture (17). This scrubbing sequence can be performed on the each of the combustible gas mixtures before combining or the scrubbing can be done on the combined gas mixture (7). Figure 4 shows an embodiment where the first water fraction from the filtering unit (2) is subjected to a first heat treatment (6) at elevated pressure. During this heating thermal degradation of fatty acids etc takes place. After the degradation the manure water fraction is concentrated is an evaporator (18) resulting in a concentrated potassium fraction (20) and a mixture of combustible gasses and steam. Said mixture is purified in a sequence as shown in figure 3 resulting in purified gas (17) and a hot second water fraction (8)

The gasses obtained from the gasification are scrubbed twice, first with Ca(OH)₂ and secondly with H₂SO₄ and then directed to an oven where they are burned thus creating heat for the process. The ashes from the gasification are subjected to galvano purification.

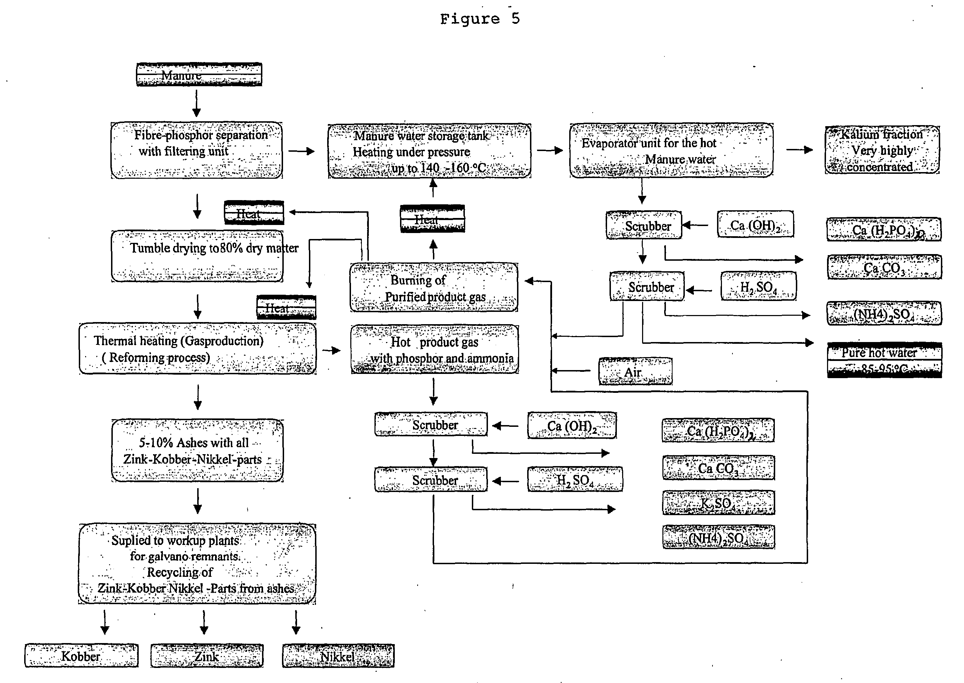

Figure 5 is an illustration of a plant for carrying out the method.

## Claims

1. A method of treating manure slurry comprising the steps of
a) separating the manure slurry in a fraction containing a substantial amount of fibres and a first water fraction essentially consisting of water,
b) drying said fibre fraction,
c) subjecting said dried fibre fraction to gasification to form a combustible mixture of gasses,
d) treating the water fraction to an elevated temperature to degrade organic compounds and optionally to evaporate water so as to form a combustible gas mixture and a second water fraction
e) burning at least a part of the combustible gasses from steps c) and d) to generate heat for the drying, gasification and/or heating in steps b), c) and d), respectively,
f) **characterized in that** the water fraction is heated to an elevated temperature above 95° to thermally degrade organic compounds and optionally to evaporate water so as to form a combustible gas mixture and a second water fraction.

2. A method according to claim 1, wherein a fraction of said combustible gasses is condensed so as to recover oil.

3. A method according to claim 1 or 2, wherein said combustible gasses are purified.

4. A method according to any one of claims 1 to 3, wherein said combustible gasses are scrubbed in at least one scrubber, preferably with Ca(OH)₂ and/or H₂SO₄.

5. A method according to any one of claims 1 to 4, wherein the residues from the gasification are burned.

6. A method according to any one of claims 1 to 5, wherein said first water fraction during thermal degradation is heated to above 120°C, more preferably heated to above 140°C, most preferably heated to between 140°C and 160°C.

7. A method according to any one of claims 1 to 6, wherein the evaporated product from said drying step is combined with the water fraction supplied to the heating step.

8. A method according to any one of claims 1 to 7 wherein the heating step comprises two steps, viz. a degradation step and a concentration step.

9. A method according to 8, wherein said concentration is carried out at reduced pressure.

10. A method according to any one of claims 1 to 9, wherein said gasification is performed at temperatures in the range from 250°C to 900°C, preferably at temperatures between 400°C and 650°C and most preferably at temperatures between 500°C and 600°C.

## Patentansprüche

1. Ein Verfahren zur Behandlung von Düngerschlamm, umfassend die Schritte, dass
(a) der Düngerschlamm in eine Fraktion, die einen erheblichen Anteil an Fasern enthält, und eine erste Wasser-Fraktion, die im wesentlichen aus Wasser besteht, aufgeteilt wird,
(b) diese Faser-Fraktion getrocknet wird,
(c) diese getrocknete Faser-Fraktion einer Vergasung unterzogen wird, um eine brennbare Mischung von Gasen zu bilden,
(d) die Wasser-Fraktion auf eine erhöhte Temperatur erhitzt wird, um organische Verbindungen abzubauen und wahlweise um Wasser zu verdampfen, um eine brennbare Gas-Mischung und eine zweite Wasser-Fraktion zu bilden,
(e) zumindest ein Teil der brennbaren Gase aus den Schritten c) und d) verbrannt wird, um Hitze für das Trocknen, Vergasen und/oder Heizen in den Schritten b), c), respektive d) zu erzeugen,
(f) **dadurch gekennzeichnet, dass** die Wasser-Fraktion auf eine erhöhte Temperatur über 95 ° erhitzt wird, um organische Verbindungen thermisch abzubauen und wahlweise um Wasser zu verdampfen, um eine brennbare Gas-Mischung und eine zweite Wasser-Fraktion zu bilden.

2. Ein Verfahren gemäss Anspruch 1, wobei die Fraktion dieser brennbaren Gase kondensiert wird, um Öl zurückzugewinnen.

3. Ein Verfahren gemäss Anspruch 1 oder 2, wobei diese brennbaren Gase gereinigt werden.

4. Ein Verfahren gemäss irgendeinem der Ansprüche 1 bis 3, wobei diese brennbaren Gase in mindestens einem Wäscher gewaschen werden, vorzugsweise mit Ca(OH)₂ und/oder H₂SO₄.

5. Ein Verfahren gemäss irgendeinem der Ansprüche 1 bis 4, wobei die Überreste aus der Vergasung verbrannt werden.

6. Ein Verfahren gemäss irgendeinem der Ansprüche 1 bis 5, wobei diese erste Wasser-Fraktion während des thermischen Abbaus auf über 120 °C erhitzt wird, bevorzugter auf über 140 °C erhitzt wird, am meisten bevorzugt auf zwischen 140 °C und 160 °C erhitzt wird.

7. Ein Verfahren gemäss irgendeinem der Ansprüche 1 bis 6, wobei das verdampfte Produkt aus diesem Trocken-Schritt mit der Wasser-Fraktion kombiniert wird, die dem Heiz-Schritt zugeführt wird.

8. Ein Verfahren gemäss irgendeinem der Ansprüche 1 bis 7, wobei der Heiz-Schritt zwei Schritte umfasst, nämlich einen Abbau-Schritt und einen Konzentrations-Schritt.

9. Ein Verfahren gemäss Anspruch 8, wobei diese Konzentration bei reduziertem Druck durchgeführt wird.

10. Ein Verfahren gemäss irgendeinem der Ansprüche 1 bis 9, wobei diese Vergasung bei Temperaturen im Bereich von 250 °C bis 900 °C durchgeführt wird, bevorzugt bei Temperaturen zwischen 400 °C bis 650 °C und am meisten bevorzugt bei Temperaturen zwischen 500 °C bis 600 °C.

## Revendications

1. Procédé de traitement de lisier, comprenant les étapes consistant à :
a) séparer le lisier en une fraction contenant une quantité substantielle de fibres et une première fraction d'eau constituée essentiellement d'eau,
b) sécher ladite fraction fibreuse,
c) soumettre ladite fraction fibreuse séchée à une gazéification en vue de former un mélange combustible de gaz,
d) traiter la fraction d'eau à une température élevée en vue de dégrader les composés organiques et, éventuellement, d'évaporer l'eau de façon à former un mélange de gaz combustible et une deuxième fraction d'eau,
e) brûler au moins une partie des gaz combustibles des étapes c) et d) en vue de générer de la chaleur pour le séchage, la gazéification et/ou le chauffage dans les étapes b), c) et d), respectivement,
f) **caractérisé en ce que** la fraction d'eau est chauffée à une température élevée supérieure à 95 °C en vue de dégrader thermiquement les composés organiques et, éventuellement, d'évaporer l'eau de façon à former un mélange de gaz combustible et une deuxième fraction d'eau.

2. Procédé selon la revendication 1, dans lequel une fraction desdits gaz combustibles est condensée de façon à récupérer de l'huile.

3. Procédé selon la revendication 1 ou 2, dans lequel lesdits gaz combustibles sont purifiés.

4. Procédé selon l'une quelconque des revendications 1 à 3, dans lequel lesdits gaz combustibles sont épurés dans au moins un épurateur, de préférence avec du Ca(OH)₂ et/ou du H₂SO₄.

5. Procédé selon l'une quelconque des revendications 1 à 4, dans lequel les résidus de la gazéification sont brûlés.

6. Procédé selon l'une quelconque des revendications 1 à 5, dans lequel ladite première fraction d'eau durant la dégradation thermique est chauffée à plus de 120 °C, plus préférablement, chauffée à plus de 140 °C, le plus préférablement, chauffée entre 140 °C et 160 °C.

7. Procédé selon l'une quelconque des revendications 1 à 6, dans lequel le produit évaporé de ladite étape de séchage est combiné avec la fraction d'eau apportée à l'étape de chauffage.

8. Procédé selon l'une quelconque des revendications 1 à 7, dans lequel l'étape de chauffage comprend deux étapes, à savoir, une étape de dégradation et une étape de concentration.

9. Procédé selon la revendication 8, dans lequel ladite concentration est effectuée à une pression réduite.

10. Procédé selon l'une quelconque des revendications 1 à 9, dans lequel ladite gazéification est réalisée à des températures dans la plage de 250 °C à 900 °C, de préférence à des températures comprises entre 400 °C et 650 °C et, le plus préférablement, à des températures comprises entre 500 °C et 600 °C.
